# FASCICULE DE BREVET EUROPEEN

(11) **EP 1 880 826 B1**
(45) Date de publication et mention de la délivrance du brevet: **29.04.2009**
(21) Numéro de dépôt: 07111931.7
(22) Date de dépôt: 06.07.2007
(51) Int. Cl.: B29C 49/56, B29C 49/06, B29C 49/36, B29C 49/48

(54) **Dispositif de moulage pour la fabrication de récipients thermoplastiques**
Vorrichtung zum Formen für die Herstellung von thermoplastischen Behältern
Moulding device for manufacturing thermoplastic containers

(30) Priorité: 21.07.2006 FR 0606716
(43) Date de publication de la demande: 23.01.2008
(73) Titulaire: Sidel Participations, 76930 Octeville Sur Mer (FR)
(72) Inventeur: Bianchini, Cédric, 76930 Octeville sur Mer (FR); Toutoux, Alexandre, 76930 Octeville sur Mer (FR)
(74) Mandataire: Cabinet Plasseraud

(56) Documents cités:
- DE-A1- 19 929 033
- FR-A1- 2 659 265
- FR-A1- 2 790 703
- JP-A- 10 230 545
- US-A1- 6 099 286

## Description

La présente invention concerne d'une façon générale le domaine du moulage de récipients, notamment de bouteilles, en matière thermoplastique telle que du PET par soufflage ou étirage-soufflage de préformes chauffées, et elle concerne plus spécifiquement des perfectionnements apportés aux dispositifs de moulage de récipients, notamment de bouteilles, en matière thermoplastique telle que du PET par soufflage ou étirage-soufflage de préformes chauffées, comportant au moins un moule à chambre de compensation.

Plus précisément, l'invention concerne des perfectionnements apportés aux dispositifs de moulage de récipients, notamment de bouteilles, en matière thermoplastique telle que du PET par soufflage ou étirage-soufflage de préformes chauffées, lesquels dispositifs de moulage comportent au moins un moule comprenant au moins deux demi-moules comportant respectivement deux supports et deux blocs de moule définissant un plan de joint en position de fermeture du moule, une chambre étanche de compensation étant définie entre le support et le bloc de moule d'un demi-moule de sorte que, par injection d'un fluide sous pression dans la chambre de compensation, ledit bloc de moule soit écarté dudit support, plusieurs moyens de rappel élastique et plusieurs moyens de butée étant interposés entre ledit support et ledit bloc de moule et étant agencés pour qu'en l'absence de fluide sous pression dans la chambre de compensation, ledit bloc de moule occupe une position rétractée dans le support.

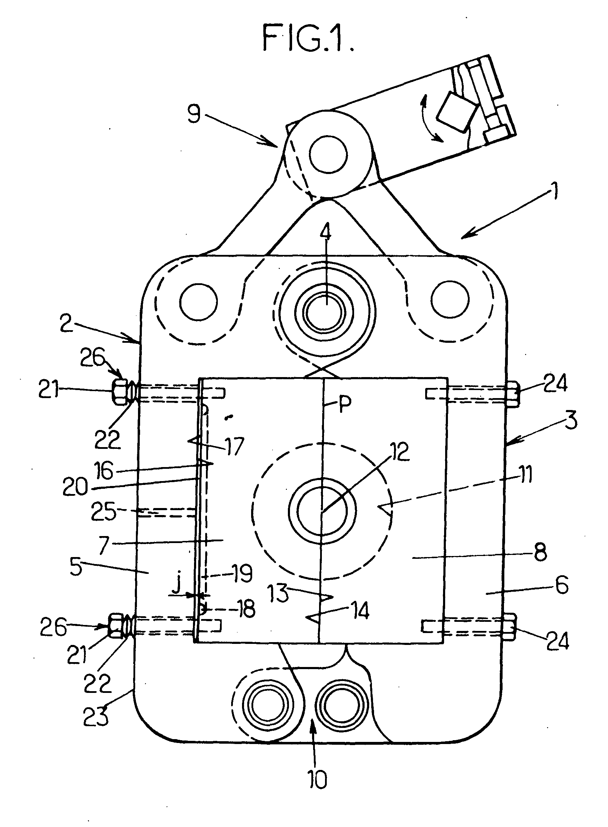

Un dispositif de moulage du type visé par l'invention est représenté schématiquement à la figure 1 des dessins annexés.

Le moule désigné dans son ensemble par la référence numérique 1 comprend, dans la configuration illustrée, deux demi-moules 2 et 3 respectivement propres à former l'ensemble de l'épaule, du corps et du fond des récipients ; dans une autre configuration possible, le moule peut comprendre trois éléments, à savoir deux demi-moules 2 et 3 pour former l'épaule et le corps des récipients et un fond de moule mobile verticalement pour former le fond des récipients.

Dans l'exemple illustré, le moule 1 est formé de deux demi-moules 2, 3 qui sont articulés en rotation l'un par rapport à l'autre sur un axe 4 (moule portefeuille) car c'est le type de moule le plus couramment utilisé dans les installations produites par la Demanderesse ; mais il doit être compris que l'invention ne vise pas exclusivement ce type de moule et peut trouver application dans des moules d'autres types, notamment des moules dans lesquels les demi-moules sont mobiles linéairement.

Les demi-moules 2, 3 comprennent deux supports 5, 6 respectivement et deux blocs 7, 8 de moule respectivement supportés par ces derniers. Dans l'exemple illustré, les blocs de moule présentent une section droite de forme générale sensiblement rectangulaire. Les deux blocs 7, 8 de moule sont creusés de deux empreintes de moulage respectives formant ensemble une cavité 11 de moulage d'axe 12. Les deux blocs 7, 8 de moule possèdent des faces coopérantes ou faces d'appui respectivement 13 et 14 qui, en position de fermeture du moule et de soufflage, sont en appui mutuel selon un plan de joint P.

Les supports 5, 6 sont agencés de manière à présenter, d'un côté, des oreilles saillantes respectives écartées l'une de l'autre, auxquelles sont raccordés des moyens d'actionnement (ouverture - fermeture) désignés globalement en 9, qui peuvent être de toute configuration appropriée et, à l'opposé, des moyens de verrouillage en position de fermeture désignés globalement en 10, qui peuvent eux aussi avoir toute configuration appropriée.

Un déterminé des deux demi-moules (ici le demi-moule 2 situé à gauche sur la figure 1) est agencé de manière qu'entre les faces 16, 17 d'assemblage respectives de son support 5 et de son bloc 7 de moule soit définie, par un joint 18 (logé dans une gorge 19 creusée par exemple dans la face 17 d'assemblage du bloc 7 de moule), une chambre 20 étanche dite "chambre de compensation" et de manière que ledit bloc 7 de moule soit déplaçable par rapport au support 5 sensiblement perpendiculairement à sa face 13 d'appui. Dans la configuration de moule de forme sensiblement quadrangulaire illustrée à titre d'exemple sur la figure 1, les faces 16, 17 d'assemblage précitées et les faces 13, 14 d'appui sont sensiblement parallèles et la chambre 20 de compensation est sensiblement parallèle à la face 13 d'appui du bloc 7 de moule.

La paroi du support 5 du demi-moule 2 déterminé est percée d'un canal 25 traversant débouchant dans la chambre 20 de compensation. Le canal 25 est raccordé (non montré) à une source de fluide sous haute pression. De façon pratique, le canal 25 peut être raccordé à la source de fluide de soufflage et, dans ce cas, on fait en sorte que la projection de la surface de la chambre 20 de compensation sur le plan P de joint soit supérieure à la surface de la projection de la cavité 11 de moulage sur ledit plan P de joint. Lors du soufflage, sous l'action de la pression régnant dans la chambre 20 de compensation, le bloc 7 de moule est repoussé en direction du bloc 8 de moule en vis-à-vis et sa face 13 d'appui est fortement pressée contre la face 14 d'appui du bloc 8 de moule.

Une fois le soufflage terminé, pour assurer le rappel du bloc 7 de moule dans sa position rétractée au fond du support 5 respectif, on prévoit que le bloc 7 de moule soit supporté par le support 5 respectif par l'intermédiaire de moyens 26 de rappel élastique. Une solution simple illustrée à la figure 1 consiste en ce que, pour constituer chaque moyen 26 de rappel élastique, un organe 22 de rappel élastique soit interposé entre la tête d'un organe 21 de boulonnage et la face externe 23 du support 5. Les organes 22 de rappel élastique peuvent consister en des ressorts tubulaires notamment monoblocs en matière synthétique (typiquement en polyuréthane) pour les moules utilisés en cycle froid ou par des empilements précis de rondelles ressorts métalliques pour les moules utilisés en cycle chaud.

De son côté, le bloc 8 de moule (situé à droite sur la figure 1) est supporté de façon fixe par le support 6 respectif par l'intermédiaire d'organes 24 de boulonnage.

Un moule agencé comme il vient d'être décrit en référence à la figure 1 des dessins annexés est divulgué dans le document FR 2 659 265 (la figure 1 des dessins annexés étant reprise de la figure 1 de ce document), auquel on pourra se reporter pour des explications plus complètes.

Toutefois, ce document omet de mentionner et de représenter des moyens de butée propres à maintenir le bloc 7 de moule, dans sa position rétractée, de manière que la chambre 20 de compensation formée entre les susdites faces 16 et 17 d'assemblage respectivement du support 5 et du bloc 7 de moule soit représentée par un intervalle j défini mécaniquement.

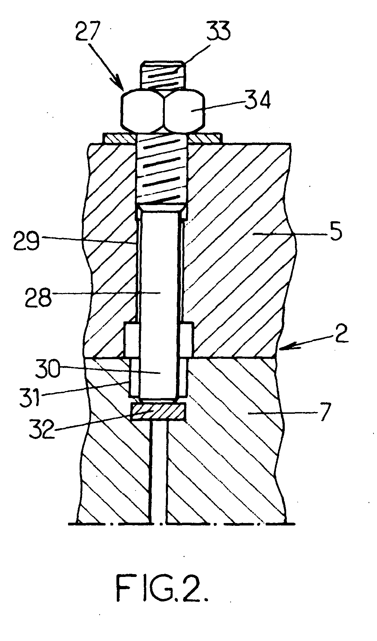

A la figure 2 des dessins joints est illustré de façon séparée un exemple de réalisation des moyens 27 de butée dont le moule 1 est équipé. Chaque moyen 27 de butée comprend une tige 28 de butée vissée dans un alésage 29 traversant le support 5. L'extrémité 30 intérieure de la tige 28 de butée vient en appui contre le bloc 7 de moule ; notamment elle peut être en appui, éventuellement avec interposition d'une plaquette 32 d'appui, contre le fond d'un évidement 31 creusé dans le bloc 7 de moule sensiblement coaxialement à l'alésage 29. La rotation de la tige 28 de butée permet d'ajuster la valeur de l'intervalle j. Un écrou 34 de freinage peut être prévu sur l'extrémité 33 libre de la tige 28 de butée pour la bloquer en rotation dans la position de réglage.

Bien entendu, les dispositions qui viennent d'être exposées ont été reconduites, de façon tout particulièrement intéressante, dans les moules couramment fabriqués par la Demanderesse dans lesquels chaque bloc de moule est de type composite et comprend une coquille munie de l'empreinte de moulage et un porte-coquille supportant ladite coquille et lui-même supporté par le support. La chambre de compensation est alors prévue entre les faces d'assemblage du support et du porte-coquille, avec mise en oeuvre de moyens de rappel élastique et de moyens de butée interposés entre le support et le bloc de moule. De tels moules avec chambre de compensation sont décrits notamment dans le document FR 2 733 176 au nom de la Demanderesse, bien que la présence de moyens de rappel élastique et de moyens de butée ne soit pas explicitée dans ce document.

Quel que soit le type de moule considéré, bien que cet agencement connu donne toute satisfaction en fonctionnement, il présente toutefois plusieurs inconvénients.

Un premier inconvénient réside dans le fait que le support 5 et le bloc 7 de moule du demi-moule 2 comportent, dans le mode de réalisation illustré dans le document FR 2 659 265, des moyens 26 de rappel élastique au nombre de huit disposés en deux colonnes et des moyens 27 de butée au nombre de quatre, tous étant situés de part et d'autre de la chambre 20 de compensation. Ces nombreux perçages et usinages affaiblissent mécaniquement ces pièces par ailleurs soumises à des contraintes mécaniques très importantes lors du soufflage.

Dans des fabrications ultérieures, le nombre des moyens de rappel élastique a été ramené à quatre ; mais le nombre total des perçages reste encore élevé.

Dans tous les cas, le démontage, puis le remontage du bloc 7 de moule (par exemple pour un changement de fabrication avec une cavité de moulage différente) nécessite de démonter, puis de remonter les nombreux moyens de rappel élastique et moyens de butée.

Surtout, un autre inconvénient important réside dans le fait qu'à chaque remontage il est nécessaire de refaire les réglages de la précontrainte de rappel et de butée pour chacun des moyens concernés. Or il s'avère que le réglage des moyens de butée dérègle systématiquement le réglage des moyens de rappel élastique pour la compensation, ce qui exige des reprises alternées de ces réglages.

Au surplus, les ressorts en matière synthétique utilisés dans les dispositifs de moulage fonctionnant en cycle froid perdent progressivement leur élasticité et finissent par s'avachir, ce qui exige leur remplacement régulier.

De leur côté, les rondelles ressorts métalliques sont assemblées sous forme d'empilement en respectant leur positionnement alterné. Or la pratique montre que, lors des opérations de remontage, des rondelles peuvent être remontées en nombre insuffisant et/ou sans respecter leur positionnement alterné dans l'empilement. De ce fait, les moyens de rappel élastique peuvent alors perdre notablement de leur efficacité et on est conduit à redémonter les moyens de rappel élastique pour compléter et/ou repositionner correctement les rondelles ressorts.

Finalement, en pratique chaque démontage, puis remontage du bloc 7 de moule exige un travail considérable et nécessite beaucoup de temps de réglage avant que le moule soit à nouveau en état de fonctionnement correct. Dans une installation de moulage de grande capacité du type carrousel tournant incorporant un grand nombre de moules (par exemple jusqu'à 34 moules), toute modification de fabrication impliquant un changement des blocs de moule est très contraignante en travail et en coût en raison de la longue durée d'immobilisation de l'installation.

Il existe donc de la part des exploitants de telles installations de moulage une demande pressante pour que ces inconvénients soient écartés, ou tout au moins fortement atténués, afin que les conditions d'exploitation de ces installations puissent être substantiellement améliorées.

A ces fins, l'invention propose un dispositif de moulage de récipients, notamment de bouteilles, en matière thermoplastique telle que du PET par soufflage ou étirage-soufflage de préformes chauffées, lequel dispositif de moulage comporte au moins un moule comprenant au moins deux demi-moules comportant respectivement deux supports et deux blocs de moule définissant un plan de joint en position de fermeture du moule, une chambre étanche de compensation étant définie entre le support et le bloc de moule d'un demi-moule de sorte que, par injection d'un fluide sous pression dans la chambre de compensation, ledit bloc de moule soit écarté dudit support, plusieurs moyens de rappel élastique et plusieurs moyens de butée étant interposés entre ledit support et ledit bloc de moule et étant agencés pour qu'en l'absence de fluide sous pression dans la chambre de compensation, ledit bloc de moule occupe une position rétractée dans le support,
caractérisé en ce que lesdits moyens de rappel élastique et lesdits moyens de butée sont en nombres égaux et sont combinés respectivement deux à deux sous forme d'ensembles unitaires comprenant chacun :
- un alésage traversant le support à l'extérieur de la chambre de compensation et sensiblement perpendiculairement au plan de joint et débouchant en regard du bloc de moule,
- un goujon traversant coaxialement ledit alésage du support et ayant une extrémité solidarisée au bloc de moule, ledit goujon comportant un premier épaulement annulaire radial tourné vers son extrémité libre,
- un manchon tubulaire vissé dans ledit alésage de manière que son extrémité intérieure prenne appui sur ledit premier épaulement radial du goujon, ledit manchon tubulaire ayant une tête extérieure au support qui définit un plateau d'appui,
- un boîtier coiffant ladite tête du manchon tubulaire et propre à un déplacement axial d'amplitude limitée par rapport à ladite tête du manchon,
- des moyens de rappel élastique interposés entre la tête du manchon tubulaire et le boîtier, et
- un écrou de mise en précharge des moyens de rappel élastique qui est vissé sur l'extrémité libre du goujon, en repoussant le boîtier contre un second épaulement radial dudit goujon.

Grâce à cet agencement, le réglage de la précharge des moyens de rappel élastique et le réglage de la butée sont prédéterminés par la structure de l'ensemble unitaire. De ce fait, ces réglages demeurent strictement indépendants l'un de l'autre et sans influence l'un sur l'autre, et aucune reprise de ces réglages n'est à effectuer sur le moule lors du montage.

Lorsque le bloc de moule doit être séparé du support, le manchon tubulaire demeure solidaire du support sans modification de sa position et l'organe de rappel élastique demeure enfermé dans le boîtier. De son côté, le goujon demeure solidaire du bloc de moule. Ensuite, le remontage du bloc de moule sur le support n'entraîne aucune modification des caractéristiques physiques des composants, et l'écrou de solidarisation vissé sur l'extrémité du goujon est bloqué contre le second épaulement de ce dernier en mettant l'organe de rappel élastique en précharge automatiquement à la valeur préétablie. L'ouvrier monteur ne peut commettre aucune erreur d'assemblage et n'a aucun réglage à effectuer, et aucune pièce composante ne peut être oubliée et/ou mal montée.

Il est avantageux qu'au manchon tubulaire soient associés des moyens de blocage propres à le bloquer en rotation par rapport au support une fois le réglage de butée effectué. En pratique, il est simple que les moyens de blocage du manchon tubulaire comprennent au moins un écrou de freinage vissé sur le manchon tubulaire et prenant appui sur le support.

Du fait de la simplification des opérations de démontage/montage à laquelle conduit l'agencement conforme à l'invention, il devient possible que, systématiquement quelle que soit l'utilisation prévue pour le moule, les moyens de rappel élastique comprennent plusieurs rondelles ressorts métalliques interposées entre le plateau de la tête du manchon tubulaire et le boîtier. On évite ainsi les inconvénients associés aux ressorts en matière synthétique.

Dans un exemple pratique de réalisation qui est simple de structure et de fabrication, l'extrémité du goujon solidarisée au bloc de moule est vissée dans celui-ci. De plus, par mesure de sécurité, on peut prévoir que l'extrémité du goujon vissée dans le bloc de moule est en outre collée dans celui-ci.

Les dispositions conformes à l'invention qui viennent d'être exposées trouvent application dans tous les types de moule à chambre de compensation. A ce titre, les dispositions en question peuvent notamment être mises en oeuvre de façon intéressante dans les moules aujourd'hui couramment fabriqués par la Demanderesse dans lesquels chaque bloc de moule est de type composite et comprend une coquille munie de l'empreinte de moulage et un porte-coquille supportant ladite coquille et lui-même supporté par le support avec chambre de compensation entre un support et le porte-coquille associé comme décrit par exemple dans les documents FR 2 733 176 et FR 2 813 231 au nom de la Demanderesse. Le goujon est alors solidarisé au porte-coquille.

De préférence, les ensembles unitaires combinant les moyens de rappel élastique et les moyens de butée sont au nombre de quatre, ce grâce à quoi on réduit considérablement le nombre des perçages pratiqués dans le support et le bloc de moule ou le porte-coquille de sorte que la résistance mécanique de ces pièces n'est pas sensiblement affectée.

Les dispositions conformes à l'invention se révèlent tout particulièrement intéressantes dans les installations de moulage de grande capacité du type carrousel tournant qui sont équipées d'une multiplicité de dispositifs de moulage (parfois plusieurs dizaines) répartis sur la périphérie d'un bâti rotatif : le changement des blocs de moule en vue d'une modification de fabrication des récipients, qui était jusqu'à présent une opération longue en raison du grand nombre de dispositifs de moulage à traiter, se révèle maintenant, avec des dispositifs de moulage agencés selon l'invention, beaucoup plus facile et beaucoup plus rapide, de sorte que la durée d'immobilisation de l'installation est considérablement réduite à la grande satisfaction des exploitants.

L'invention sera mieux comprise à la lecture de la description détaillée qui suit de certains modes de réalisation préférés donnés uniquement à titre d'exemples nullement limitatifs. Dans cette description, on se réfère aux dessins annexés sur lesquels :
- la figure 1 est une vue schématique de dessus d'un moule agencé conformément à l'état de la technique, seuls les moyens de rappel élastique d'un des blocs de moule étant visibles ;
- la figure 2 est une vue en coupe de côté d'une partie du moule de la figure 1 montrant les moyens de butée associés audit bloc de moule ;
- les figures 3A et 3B sont des vues partielles de côté, en coupe et partiellement extérieure, d'un mode de réalisation préféré d'un ensemble unitaire conforme à l'invention monté dans un moule du type de celui de la figure 1 et montré respectivement dans la situation assemblée et dans la situation désassemblée du moule ; et
- la figure 4 est une vue partielle de côté, en coupe et partiellement extérieure, du même mode de réalisation préféré de l'ensemble unitaire conforme à l'invention monté dans un moule de type différent.

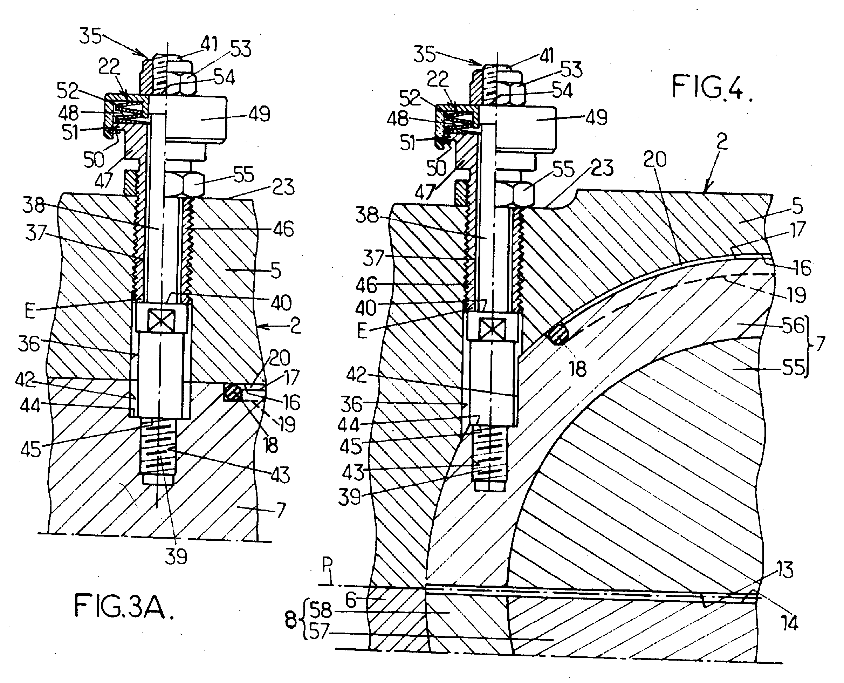

On se reportera tout d'abord à la figure 3A sur laquelle les mêmes références numériques qu'aux figures 1 et 2 ont été conservées pour désigner les mêmes organes. A la figure 3A seules sont montrées, par souci de clarté, une portion du support 5 et une portion en correspondance du bloc 7 de moule.

Conformément à l'invention, les moyens de rappel élastique et les moyens de butée sont en nombres égaux et sont combinés respectivement deux à deux sous forme d'ensembles unitaires. A la figure 3A est illustré un tel ensemble unitaire, désigné dans son ensemble par la référence numérique 35, qui est agencé de la façon suivante.

Un alésage 36 traverse le support 5 à l'extérieur de la chambre de compensation (non visible à la figure 3A) et sensiblement perpendiculairement au plan de joint et débouche devant le bloc 7 de moule ; cet alésage 36 est taraudé au moins sur une partie de sa longueur, notamment en 37 au voisinage de son orifice comme montré à la figure 3A.

Un goujon 38 est engagé coaxialement à travers l'alésage 36 du support 5 et son extrémité 39 intérieure est solidarisée au bloc 7 de moule. Le goujon 38 est muni d'un premier épaulement 40 annulaire radial qui est tourné vers son extrémité 41 libre, opposée à la susdite extrémité 39 intérieure, laquelle extrémité 41 libre reste extérieure au support 5. De façon pratique comme montré à la figure 3A, l'extrémité 39 intérieure du goujon 38 est vissée dans le bloc 7 de moule. Dans l'exemple concret de réalisation illustré, le bloc 7 de moule comporte un logement 42 situé dans la continuité de l'alésage 37 du support et coaxial à celui-ci, lequel logement 42 se prolonge par un alésage 43 taraudé de diamètre moindre que celui du logement 42 de sorte qu'est ainsi défini un épaulement 44 annulaire radial. De son côté, l'extrémité 39 intérieure, filetée, du goujon 38 possède un diamètre réduit de manière à définir une portée 45 annulaire radiale de serrage sur l'épaulement 44 lorsque l'extrémité 39 intérieure est vissée dans l'alésage 43. De préférence, par mesure de précaution, l'extrémité 39 du goujon 38 peut en outre être collée dans l'alésage 43.

Un manchon 46 tubulaire est vissé dans la partie 37 taraudée de l'alésage 36 du support 5 de manière que son extrémité E intérieure vienne en butée contre le premier épaulement 40 radial du goujon 38. A son extrémité opposée, le manchon 46 tubulaire se termine par une tête 47 qui reste extérieure au support 5. La tête 47 peut par exemple être conformée extérieurement en écrou six pans pour permettre de faire tourner le manchon 46 à l'aide d'une clé ou d'une pince et elle est conformée supérieurement sous forme d'un plateau 48.

Un boîtier 49 est associé à la tête 47 du manchon 46 tubulaire et coiffe au moins le plateau 48 de celle-ci. Le boîtier 49 est agencé sous forme annulaire et entoure l'extrémité 41 libre du goujon 38 (plus précisément entoure un tronçon élargi du goujon définissant un second épaulement 54 annulaire radial qui est tourné vers l'extrémité 41 libre du goujon et dont il sera question plus précisément plus loin) pour être à même de subir un déplacement axial d'amplitude limitée par rapport à la tête 47 du manchon 46. A cet effet, des moyens de retenue sont prévus pour limiter l'amplitude dudit déplacement axial. Ces moyens de retenue peuvent de façon simple consister en une bague ressort ou circlip 50 qui est retenu dans une gorge pratiquée dans la face interne du boîtier 49 et qui prend appui sous un rebord 51 périphérique du plateau 48 de la tête 47 du manchon.

Les moyens 22 de rappel élastique sont interposés entre le plateau 48 de la tête 47 du manchon 38 tubulaire et le boîtier 49. Les moyens 22 de rappel élastique peuvent comprendre plusieurs rondelles ressorts 52 métalliques empilées les unes sur les autres selon la configuration requise, l'empilement prenant appui contre le plateau 48 et contre le boîtier 49.

Enfin, un écrou 53 de mise en précharge des moyens 22 de rappel élastique est vissé sur l'extrémité 41 libre du goujon 38 jusqu'à venir en butée contre le susdit second épaulement 54 radial prévu sur le goujon 38. Dans cette position, l'écrou 53 porte sur le boîtier 49 et le repousse en direction du plateau 48 en préchargeant les rondelles ressorts 52.

Par mesure de sécurité, on peut avantageusement associer au manchon 46 tubulaire des moyens de blocage en rotation permettant de le bloquer par rapport au support 5 une fois mis en butée contre l'épaulement 40 du goujon 38. De façon simple, on peut à cet effet prévoir un écrou 55 de freinage vissé sur le manchon 46 tubulaire et propre à être serré contre la face 23 externe du support 5.

Grâce à l'agencement de l'ensemble unitaire 35 conforme à l'invention qui vient d'être décrit de façon détaillée en regard de la figure 3A, le réglage de la précharge des moyens 22 de rappel élastique et le réglage de la butée E/40 sont prédéterminés par la structure de l'ensemble unitaire 35. De ce fait, ces réglages demeurent strictement indépendants l'un de l'autre et sans influence l'un sur l'autre, et aucune reprise de ces réglages n'est à effectuer sur le moule lors du montage.

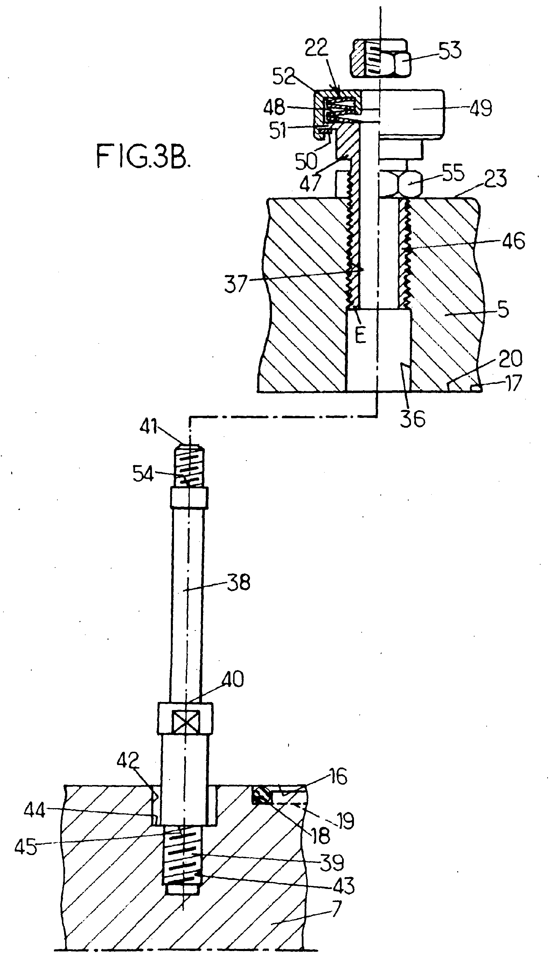

Lorsque le bloc de moule doit être séparé du support comme montré à la figure 3B, le manchon 46 tubulaire demeure solidaire du support 5 sans modification de sa position et l'organe 52 de rappel élastique demeure enfermé dans le boîtier 49 : cet organe n'étant pas démonté, il n'y a aucun risque pour un possible remontage défectueux (omission de rondelles, rondelles mal positionnées). De son côté, le goujon 38 demeure solidaire du bloc 7 de moule.

Ensuite, le remontage du bloc 7 de moule sur le support 5 n'entraîne aucune modification des caractéristiques physiques des composants. L'extrémité E du manchon 46 tubulaire vient automatiquement porter contre le premier épaulement 40 du goujon 38 et l'écrou 53 de solidarisation vissé sur l'extrémité 41 du goujon 38 est bloqué contre le second épaulement 54 de ce dernier, ce qui met l'organe 52 de rappel élastique en précharge automatiquement à la valeur préétablie. Le monteur ne peut commettre aucune erreur d'assemblage et n'a aucun réglage à effectuer, et aucune pièce composante ne peut être oubliée et/ou mal montée.

La mise en oeuvre des dispositions qui viennent d'être décrites semble devoir se révéler tout particulièrement intéressante dans les moules à structure composite aujourd'hui couramment installés par la Demanderesse dans les installations de soufflage ou d'étirage-soufflage qu'elle fabrique. Comme montré à la figure 4, il s'agit essentiellement de moules de forme générale cylindrique dans lesquels chaque bloc de moule est de type composite et comprend une coquille munie de l'empreinte de moulage respective et un porte-coquille supportant ladite coquille et lui-même supporté par le support correspondant. Ainsi, le bloc 7 de moule plus spécifiquement concerné par l'invention comprend la coquille 55 et le porte-coquille 56, tandis que l'autre bloc 8 de moule comprend la coquille 57 et le porte-coquille 58. De tels moules avec chambre de compensation sont décrits notamment dans les documents FR 2 733 176 et FR 2 813 231, au nom de la Demanderesse, auquel on pourra se reporter. Dans le contexte de l'invention, c'est alors le porte-coquille 56 qui est aménagé en vue de la compensation comme exposé plus haut et, à la figure 4, on a conservé les mêmes références numériques pour désigner les organes ou parties identiques à ceux de la figure 3. Plus particulièrement pour ce qui concerne les dispositions propres à l'invention, l'alésage 42 et l'alésage taraudé 43 sont ici creusés dans le porte-coquille 56, le reste de l'agencement demeurant identique à ce qui a été décrit ci-dessus.

## Revendications

1. Dispositif de moulage de récipients, notamment de bouteilles, en matière thermoplastique telle que du PET par soufflage ou étirage-soufflage de préformes chauffées, lequel dispositif de moulage comporte au moins un moule (1) comprenant au moins deux demi-moules (2, 3) comportant respectivement deux supports (4, 5) et deux blocs (6, 7) de moule définissant un plan (P) de joint en position de fermeture du moule, une chambre (20) étanche de compensation étant définie entre le support (5) et le bloc (7) de moule d'un demi-moule (2) de sorte que, par injection d'un fluide sous pression dans la chambre (20) de compensation, ledit bloc (7) de moule soit écarté dudit support (5), plusieurs moyens (22) de rappel élastique et plusieurs moyens (36) de butée étant interposés entre ledit support (5) et ledit bloc (7) de moule et étant agencés pour qu'en l'absence de fluide sous pression dans la chambre (20) de compensation, ledit bloc (7) de moule occupe une position rétractée dans le support (5),
**caractérisé en ce que** lesdits moyens (22) de rappel élastique et lesdits moyens (27) de butée sont en nombres égaux et sont combinés respectivement deux à deux sous forme d'ensembles (35) unitaires comprenant chacun :
- un alésage (36) traversant le support (5) à l'extérieur de la chambre (20) de compensation et sensiblement perpendiculairement au plan (P) de joint et débouchant en regard du bloc (7) de moule,
- un goujon (38) traversant coaxialement ledit alésage (36) du support (5) et ayant une extrémité (39) solidarisée au bloc (7) de moule, ledit goujon (38) comportant un premier épaulement (40) annulaire radial tourné vers son extrémité (41) libre,
- un manchon (46) tubulaire vissé dans ledit alésage (36) de manière que son extrémité (E) intérieure prenne appui sur ledit premier épaulement (40) radial du goujon (38), ledit manchon (46) tubulaire ayant une tête (47) extérieure au support (5) qui définit un plateau (48) d'appui,
- un boîtier (49) coiffant ladite tête (47) du manchon (46) tubulaire et propre à un déplacement axial d'amplitude limitée par rapport à ladite tête (47) du manchon,
- des moyens (22) de rappel élastique interposés entre la tête (47) du manchon (38) tubulaire et le boîtier (49), et
- un écrou (53) de mise en précharge des moyens (22) de rappel élastique qui est vissé sur l'extrémité (41) libre du goujon (38) contre un second épaulement (54) radial dudit goujon, en repoussant le boîtier (49),
ce grâce à quoi le réglage de la précharge des moyens de rappel élastique et le réglage de la butée demeurent indépendants l'un de l'autre et sans influence l'un sur l'autre et sont prédéterminés par les deux épaulements radiaux du goujon (38).

2. Dispositif de moulage selon la revendication 1, **caractérisé en ce qu'**au manchon (46) tubulaire sont associés des moyens de blocage propres à le bloquer en rotation par rapport au support (5) une fois le réglage de butée effectué.

3. Dispositif de moulage selon la revendication 2, **caractérisé en ce que** les moyens de blocage du manchon (46) tubulaire comprennent au moins un écrou (55) de freinage vissé sur le manchon (38) tubulaire et prenant appui sur le support (5).

4. Dispositif de moulage selon l'une quelconque des revendications 1 à 3, **caractérisé en ce que** les moyens (22) de rappel élastique comprennent plusieurs rondelles ressorts (52) métalliques interposées entre la tête (47) du manchon (46) tubulaire et le boîtier (49).

5. Dispositif de moulage selon l'une quelconque des revendications 1 à 4, **caractérisé en ce que** l'extrémité (39) du goujon (38) solidarisée au bloc (7) de moule est vissée dans celui-ci.

6. Dispositif de moulage selon la revendication 5, **caractérisé en ce que** l'extrémité (39) du goujon (38) vissée dans le bloc (7) de moule est en outre collée dans celui-ci.

7. Dispositif de moulage selon l'une quelconque des revendications 1 à 6, **caractérisé en ce que** chaque bloc (7, 8) de moule est de type composite comprenant une coquille (55, 57) munie d'une empreinte de moulage et un porte-coquille (56, 58) supportant ladite coquille (55, 57) et lui-même supporté par le support (5, 6) et **en ce que** le goujon (38) est solidarisé au porte-coquille (56).

8. Dispositif de moulage selon l'une quelconque des revendications 1 à 7, **caractérisé en ce que** les ensembles (35) unitaires combinant les moyens de rappel élastique et les moyens de butée sont au nombre de quatre.

9. Dispositif de moulage rotatif à grande cadence du type carrousel tournant comportant une multiplicité de moules répartis périmétriquement sur un bâti rotatif, **caractérisé en ce que** chaque moule est agencé selon l'une quelconque des revendications 1 à 8.

## Claims

1. Device for moulding containers, especially bottles, made from thermoplastic, such as PET, by blow-moulding or stretch-blow-moulding heated preforms, which moulding device includes at least one mould (1) comprising at least two half-moulds (2, 3) respectively comprising two supports (5, 6) and two mould blocks (7, 8) defining a parting plane (P) in the closed position of the mould, a leak-tight compensating chamber (20) being defined between the support (5) and the mould block (7) of one half-mould (2) in such a manner that, due to a pressurized fluid being injected into the compensating chamber (20), said mould block (7) is moved apart from said support (5), a plurality of elastic return means (26) and a plurality of abutment means (27) being interposed between said support (5) and said mould block (7) and being arranged such that, in the absence of pressurized fluid in the compensating chamber (20), said mould block (7) is in a retracted position in the support (5),
**characterized in that** said elastic return means (26) and said abutment means (27) are equal in number and are combined respectively in pairs in the form of unitary assemblies (35) each comprising:
- a bore (36) extending through the support (5) on the outside of the compensating chamber (20) and substantially perpendicularly to the parting plane (P) and opening opposite the mould block (7),
- a pin (38) passing coaxially through said bore (36) of the support (5) and having one end (39) secured to the mould block (7), said pin (38) comprising a first radial annular shoulder (40) facing the free end (41) thereof,
- a tubular sleeve (46) screwed into said bore (36) such that the inner end (E) thereof bears on said first radial shoulder (40) of the pin (38), said tubular sleeve (46) having a head (47) which is external to the support (5) and which defines a bearing plate (48),
- a housing (49) capping said head (47) of the tubular sleeve (46) and adapted for an axial displacement with a limited amplitude with respect to said head (47) of the sleeve,
- elastic return means (26) interposed between the head (47) of the tubular sleeve (46) and the housing (49), and
- a nut (53) for preloading the elastic return means (26), which is screwed on the free end (41) of the pin (38) against a second radial shoulder (54) of said pin, while pushing the housing (49)
whereby the setting of the preload of the elastic return means and the setting of the abutment remain independent of one another and without any influence on one another and are predetermined by the two radial shoulders of the pin (38).

2. Moulding device according to Claim 1, **characterized in that** with the tubular sleeve (46) blocking means are associated which are suitable for blocking it in rotation with respect to the support (5), once the abutment setting has been carried out.

3. Moulding device according to Claim 2, **characterized in that** the means for blocking the tubular sleeve (46) comprise at least one lock nut (55) screwed on the tubular sleeve (38) and bearing on the support (5).

4. Moulding device according to any one of Claims 1 to 3, **characterized in that** the elastic return means (26) comprise a plurality of metallic spring washers (52) interposed between the head (47) of the tubular sleeve (46) and the housing (49).

5. Moulding device according to any one of Claims 1 to 4, **characterized in that** that end (39) of the pin (38) which is secured to the mould block (7) is screwed therein.

6. Moulding device according to Claim 5, **characterized in that** the end (39) of the pin (38) which is screwed in the mould block (7) is, furthermore, adhesively bonded therein.

7. Moulding device according to any one of Claims 1 to 6, **characterized in that** each mould block (7, 8) is of the composite type comprising a shell (55, 57) provided with a moulding recess and a shell carrier (56, 58) supporting said shell (55, 57) and itself supported by the support (5, 6), and **in that** the pin (38) is secured to the shell carrier (56).

8. Moulding device according to any one of Claims 1 to 7, **characterized in that** the unitary assemblies (35) combining the elastic return means and the abutment means are four in number.

9. High-performance rotary moulding device of the carousel type comprising a multiplicity of moulds distributed peripherally on a rotary framework, **characterized in that** each mould is designed according to any one of Claims 1 to 8.

## Patentansprüche

1. Vorrichtung zum Formen von Behältern, insbesondere Flaschen, aus thermoplastischem Material, wie PET, mittels Blasformen oder Streckblasen erhitzter Vorformlinge, wobei die Formvorrichtung mindestens eine Form (1) mit mindestens zwei Formhälften (2, 3) umfasst, die jeweils zwei Träger (4, 5) und zwei Formblöcke (6, 7) aufweisen, die eine Teilungsebene (P) in einer Schließstellung der Form definieren, wobei eine dichte Kompensationskammer (20) zwischen dem Träger (5) und dem Formblock (7) einer Formhälfte (2) definiert ist, so dass durch Einspritzen eines unter Druck stehenden Fluids in die Kompensationskammer (20) der Formblock (7) von dem Träger (5) entfernt wird, wobei mehrere elastische Rückzugsmittel (22) und mehrere Anschlagmittel (27) zwischen dem Träger (5) und dem Formblock (7) eingesetzt sind und derart angeordnet sind, dass bei Fehlen von unter Druck stehendem Fluid in der Kompensationskammer (20) der Formblock (7) eine zurückgezogene Stellung in dem Träger (5) einnimmt, **dadurch gekennzeichnet, dass** die elastischen Rückzugsmittel (22) und die Anschlagmittel (27) gleicher Anzahl sind und jeweils paarweise in der Form von einstückigen Einheiten (35) kombiniert sind, die jeweils Folgendes umfassen:
- eine Bohrung (36), die den Träger (5) außerhalb der Kompensationskammer (20) und im Wesentlichen senkrecht zur Teilungsebene (P) durchläuft und im Formblock (7) mündet,
- einen Stift (38), der die Bohrung (36) des Trägers (5) koaxial durchläuft und ein Ende (39) aufweist, das fest mit dem Formblock (7) verbunden ist, wobei der Stift (38) eine erste radiale ringförmige Schulter (40) umfasst, die seinem freien Ende (41) zugewandt ist,
- eine röhrenförmige Hülse (46), die derart in die Bohrung (36) eingeschraubt ist, dass ihr unteres Ende (E) auf der ersten radialen Schulter (40) des Stifts (38) zum Aufliegen kommt, wobei die röhrenförmige Hülse (46) außerhalb des Trägers (5) einen Kopf (47) aufweist, der eine Auflageplatte (48) definiert,
- ein Gehäuse (49), das den Kopf (47) der röhrenförmigen Hülse (46) abdeckt und zu einer axialen Verschiebung mit einer begrenzten Amplitude relativ zu dem Kopf (47) der Hülse geeignet ist,
- elastische Rückzugsmittel (22), die zwischen dem Kopf (47) der röhrenförmigen Hülse (46) und dem Gehäuse (49) eingesetzt sind, und
- eine Mutter (53) zum Vorspannen der elastischen Rückzugsmitteln (22), die unter Zurückdrücken des Gehäuses (49) gegen eine zweite radiale Schulter (54) des Stifts auf das freie Ende (41) des Stifts (38) geschraubt ist,
wodurch die Einstellung der Vorspannung der elastischen Rückzugsmittel und die Einstellung des Anschlags unabhängig voneinander und ohne Einfluss aufeinander bleiben und von den zwei radialen Schultern des Stifts (38) vorgegeben sind.

2. Formvorrichtung nach Anspruch 1, **dadurch gekennzeichnet, dass** die röhrenförmige Hülse (46) mit Arretiermitteln verbunden ist, die diese in Drehung im Verhältnis zu dem Träger (5) arretieren kann, sobald die Einstellung des Anschlags vorgenommen wurde.

3. Formvorrichtung nach Anspruch 2, **dadurch gekennzeichnet, dass** die Arretierungsmittel der röhrenförmigen Hülse (46) mindestens eine Sicherungsmutter (55) umfassen, die auf die röhrenförmige Hülse (46) geschraubt ist und auf dem Träger (5) aufliegt.

4. Formvorrichtung nach einem der Ansprüche 1 bis 3, **dadurch gekennzeichnet, dass** die elastischen Rückzugsmittel (22) mehrere metallische Federringe (52) umfassen, die zwischen dem Kopf (47) der röhrenförmigen Hülse (46) und dem Gehäuse (49) eingesetzt sind.

5. Formvorrichtung nach einem der Ansprüche 1 bis 4, **dadurch gekennzeichnet, dass** das mit dem Formblock (7) verbundene Ende (39) des Stifts (38) in den Formblock eingeschraubt ist.

6. Formvorrichtung nach Anspruch 5, **dadurch gekennzeichnet, dass** das in den Formblock (7) eingeschraubte Ende (39) des Stifts (38) außerdem auf den Formblock geklebt ist.

7. Formvorrichtung nach einem der Ansprüche 1 bis 6, **dadurch gekennzeichnet, dass** jeder Formblock (7, 8) als Verbundbauteil ausgeführt ist, das eine mit einem Formhohlraum ausgestattete Schale (55, 57) und einen Schalenträger (56, 58) umfasst, der die Schale (55, 57) trägt und selbst von dem Träger (5, 6) getragen wird, und dadurch, dass der Stift (38) fest mit dem Schalenträger (56) verbunden ist.

8. Formvorrichtung nach einem der Ansprüche 1 bis 7, **dadurch gekennzeichnet, dass** es vier einstückige Einheiten (35) gibt, die die elastischen Rückzugsmittel und die Anschlagmittel kombinieren.

9. Hochleistungsdrehkarussellformvorrichtung mit einer Vielzahl Formen, die umfänglich auf einem Drehgestell verteilt sind, **dadurch gekennzeichnet, dass** jede Form nach einem der Ansprüche 1 bis 8 ausgeführt ist.
